# EUROPÄISCHE PATENTANMELDUNG

(11) **EP 4 518 148 A1**
(43) Veröffentlichungstag der Anmeldung: **05.03.2025**
(21) Anmeldenummer: 23194869.6
(22) Anmeldetag: 01.09.2023
(51) Int. Cl.: H02S 20/25, H02S 40/36

(54) **VERBINDUNGSVORRICHTUNG FÜR PHOTOVOLTAIKMODULE, PHOTOVOLTAIKSYSTEM UND PHOTOVOLTAIKMODUL**

(71) Anmelder: Lapp Engineering AG, 6330 Cham (CH)
(72) Erfinder: KURZ, Stefan, 70199 Stuttgart (DE); KRECH, Johann, 72160 Horb am Neckar (DE); SEGRT, Ivica, 75392 Deckenpfronn (DE)
(74) Vertreter: Rutz & Partner

(57) **Zusammenfassung**

Die Verbindungsvorrichtung (1), die zur Verbindung eines ersten und eines zweiten Photovoltaikmoduls (10A, 10B) eines Photovoltaiksystems (100) vorgesehen ist, umfasst ein erstes Verbindungsvorrichtungsteil (11) und ein zweites Verbindungsvorrichtungsteil (12) mit einem elektrischen Verbinder (3), der ein für das erste Photovoltaikmodul (10A) vorgesehenes erstes Verbinderteil (31) mit einem ersten Verbindungskontakt (311) und ein für das zweite Photovoltaikmodul (10) vorgesehenes zweites Verbinderteil (32) mit einem zweiten Verbindungskontakt (321) aufweist.

## Beschreibung

Die Erfindung betrifft eine Verbindungsvorrichtung zur Verbindung von Photovoltaikmodulen, ein Photovoltaiksystem mit wenigstens zwei Photovoltaikmodulen, die mittels einer solchen Verbindungsvorrichtung miteinander verbunden sind, und ein Photovoltaikmodul für ein solches Photovoltaiksystem, das wenigstens zur Abgabe elektrischer Energie vorgesehen ist.

Photovoltaikmodule können beispielsweise in Form von Platten, Dachpfannen, Dachziegeln oder Dachsteinen vorliegen und, beispielsweise mittels einer Installationsstruktur auf einem Dach oder einer Wand montiert werden. Üblicherweise wird eine Lattung, gegebenenfalls eine Dachlattung, vorgesehen, an der die Photovoltaikmodule installiert werden.

Die Montage eines Photovoltaiksystems mit Photovoltaikmodulen, gegebenenfalls Photovoltaikmodulen, die zusätzlich mit einem Solarthermiemodul ausgerüstet sind, ist beispielsweise aus der WO2020229686A2 bekannt. Darin ist beschrieben, dass die Installation von Photovoltaikmodulen in der Ausgestaltung von Dachziegeln aufwendig und schwierig ist. Um die Installationsarbeiten zu vereinfachen, werden die Photovoltaikmodule mit Öffnungen versehen, in die der Installateur eingreifen kann, um elektrische Verbindungen zwischen zwei Photovoltaikmodulen zu erstellen. Dieses Photovoltaiksystem erfordert somit entsprechend ausgestaltete Photovoltaikmodule und noch immer einen erheblichen Installationsaufwand, da der Installateur in das Photovoltaikmodul eingreifen muss, um elektrische Verbindungen zu erstellen.

Die US20080302030A1 offenbart ein Photovoltaiksystem mit Photovoltaikmodulen in der Ausgestaltung von Dachziegeln mit einer elektrischen Verbindungsvorrichtung, die es erlaubt, solche Dachziegel oder Reihen von Dachziegeln einfacher zu installieren. Dazu wird beim Vorgang der Installation der Dachziegel ein elektrischer Kontakt eines ersten Dachziegels mit einem bogenförmigen zweiten Kontakt eines zweiten Dachziegels verbunden. Der bogenförmige zweite Kontakt, der eine Aufnahmeöffnung aufweist, in die der erste Kontakt eingreifen kann, wird beim Verbindungsvorgang aus einer konvexen Form in eine konkave Form überführt. Diese Verbindungsvorrichtung weist hingegen verschiedene Nachteile auf. Einerseits ist bei unpräziser Ausrichtung der Dachziegel nicht gewährleistet, dass der Verbindungsvorgang korrekt verläuft und eine optimale elektrische Verbindung erstellt wird. Weiterhin treten bei derartigen Installationen in Abhängigkeit der aktuellen Temperatur, des Klimas und/oder Materialalterung üblicherweise Dehnungen auf, die auf die Verbindungsvorrichtung einwirken und die elektrischen Kontakte gegeneinander verschieben, wodurch Kontaktierungsprobleme auftreten können. Weiterhin sind die elektrischen Kontakte gegen äussere Einflüsse kaum geschützt, sodass diese durch Witterungserscheinungen oder Verschmutzung in ihrer Funktion beeinträchtigt werden. Zudem sind die stromführenden Kontakte leicht zugänglich, sodass auch Sicherheitsrisiken bestehen.

Der vorliegenden Erfindung liegt daher die Aufgabe zugrunde, eine verbesserte Verbindungsvorrichtung zur Verbindung von Photovoltaikmodulen, ein Photovoltaiksystem mit wenigstens zwei Photovoltaikmodulen, die mittels einer solchen Verbindungsvorrichtung miteinander verbunden sind, und ein Photovoltaikmodul für ein solches Photovoltaiksystem zu schaffen, das wenigstens zur Abgabe elektrischer Energie vorgesehen ist.

Photovoltaikmodule sollen beliebig ausgestaltet werden können und beispielsweise die Form einer Platte, einer Dachpfanne, eines Dachziegels oder eines Dachsteins aufweisen können. Photovoltaikmodule sollen auch mehrere solche Einheiten, beispielsweise Dachziegel, aufweisen können, sodass die Installation noch rascher und kostengünstiger erfolgen kann. In der bevorzugten Ausgestaltung als Dachziegel sollen die Photovoltaikmodule vorteilhaft mit einer Dachlattung verbunden werden können.

Photovoltaikmodule sollen zusätzlich zur Abgabe elektrischer Energie optional auch andere Funktionen erfüllen können und beispielsweise zusätzlich zur Abgabe von Wärmeenergie vorgesehen sein.

Erfindungsgemässe Photovoltaiksysteme sollen in einfacher Weise aufgebaut sein und mit minimalem Aufwand rasch und zuverlässig installiert werden können. Die Montage einzelner Photovoltaikmodule soll einfach möglich sein, sodass die Installation von Photovoltaikmodulen auch an exponierten Stellen eines Gebäudes rasch und problemlos erfolgen kann.

Beim mechanischen Verbinden der Photovoltaikmodule und der Teile der Verbindungsvorrichtungen sollen zuverlässige elektrische Verbindungen der Anschlussleitungen automatisch und sicher erstellt werden. Dabei sollen qualitativ hochwertige und stabile Verbindungen realisiert werden. Die Verbindung der Verbindungskontakte soll rasch und präzise erfolgen können, ohne dass die Verbindungskontakte optisch überwacht werden.

Aufwändige Arbeiten an der Rückseite der Photovoltaikmodule beim Anschluss der Photovoltaikmodule sollen vermieden werden.

Die geforderte sichere elektrische Verbindung soll unabhängig von äusseren Einwirkungen, wie Materialdehnungen aufgrund thermischer Einwirkungen oder Materialalterung, beispielsweise Alterung der Dachlattung, und unabhängig von einwirkender Nässe, Feuchtigkeit oder Verschmutzung dauernd erhalten bleiben.

Die Verbindungsvorrichtung soll vorzugsweise eine Zugentlastung aufweisen, sodass auch diesbezügliche unerwünschte mechanische Einwirkungen auf die Verbindungskontakte vermieden werden können.

Die Verbindungsvorrichtung soll zuverlässig gegen unzulässige Eingriffe geschützt sein, sodass ein unzulässiger Zugriff auf die gegebenenfalls unter Spannung stehenden Verbindungskontakte verhindert wird und entsprechende Arbeiten nur mit geeignetem Werkzeug ausgeführt werden können.

Diese Aufgabe wird mit einem einer Verbindungsvorrichtung gemäss Anspruch 1, einem Photovoltaiksystem mit wenigstens einer solchen Verbindungsvorrichtung gemäss Anspruch 14 und einem Photovoltaikmodul für ein solches Photovoltaiksystem gemäss Anspruch 15 gelöst. Vorteilhafte Ausgestaltungen der Erfindung sind in weiteren Ansprüchen angegeben.

Die Verbindungsvorrichtung, die zur Verbindung eines ersten und eines zweiten Photovoltaikmoduls eines Photovoltaiksystems vorgesehen ist, umfasst ein erstes Verbindungsvorrichtungsteil und ein zweites Verbindungsvorrichtungsteil mit einem elektrischen Verbinder, der ein für das erste Photovoltaikmodul vorgesehenes erstes Verbinderteil mit einem ersten Verbindungskontakt und ein für das zweite Photovoltaikmodul vorgesehenes zweites Verbinderteil mit einem zweiten Verbindungskontakt aufweist.

### Erfindungsgemäss ist vorgesehen

- dass ein zur Aufnahme des elektrischen Verbinders dienendes Lagergehäuse vorgesehen ist, mit einem ersten Lagergehäuseteil, das eine zur Aufnahme des ersten Verbinderteils vorgesehene erste Lageröffnung aufweist, und mit einem zweiten Lagergehäuseteil, das eine zur Aufnahme des zweiten Verbinderteils vorgesehene zweite Lageröffnung aufweist;
- dass wenigstens das erste oder das zweite Verbinderteil im zugehörigen ersten oder zweiten Lagergehäuseteil verschiebbar und vorzugsweise elastisch gehalten ist;
- dass das erste Verbinderteil ein erstes Verbindergehäuseteil umfasst, in dem der erste Verbindungskontakt gehalten ist und das wenigstens ein erstes Verbindungselement aufweist;
- dass das zweite Verbinderteil ein zweites Verbindergehäuseteil umfasst, in dem der zweite Verbindungskontakt gehalten ist und das wenigstens ein zweites Verbindungselement aufweist; und
- dass das erste Verbindungsvorrichtungsteil, welches das erste Lagergehäuseteil und das erste Verbinderteil umfasst, und das zweite Verbindungsvorrichtungsteil, welches das zweite Lagergehäuseteil und das zweite Verbinderteil umfasst, miteinander verbindbar sind, wobei anhand der ersten und zweiten Verbindungselemente wenigstens eine formschlüssige Verbindung zwischen dem ersten Verbinderteil und dem zweiten Verbinderteil resultiert.

Das erfindungsgemässe Photovoltaiksystem umfasst wenigstens zwei einander überlappende Photovoltaikmodule, die im Bereich der Überlappung mittels einer erfindungsgemässen Verbindungsvorrichtung miteinander verbunden sind. Nach dem Zusammenfügen der Verbindungsvorrichtung sind das erste und das zweite Verbinderteil formschlüssig und vorzugsweise manuell nicht mehr lösbar miteinander verbunden. Die Lagergehäuseteile hingegen sind vorzugsweise durch die Schwerkraft der auseinanderliegenden Photovoltaikmodule gehalten und sind durch Krafteinwirkung weiterhin axial und/oder radial gegeneinander verschiebbar, um Materialdehnungen zu kompensieren.

Erfindungsgemässe Photovoltaikmodule, die für dieses Photovoltaiksystem vorgesehen sind, umfassen einen Modulkörper, der wenigstens ein photovoltaisches Element umfasst oder hält, ein erstes Verbindungsvorrichtungsteil der Verbindungsvorrichtung, das auf einer ersten Seite des Modulkörpers angeordnet und vorzugsweise formschlüssig und/oder durch eine Rastverbindung mit dem Modulkörper verbunden ist, ein zweites Verbindungsvorrichtungsteil der Verbindungsvorrichtung, das auf einer vorzugsweise der ersten Seite gegenüber liegenden zweiten Seite des Modulkörpers angeordnet und vorzugsweise formschlüssig und/oder durch eine Rastverbindung mit dem Modulkörper verbunden ist, wobei das erste und das zweite Verbindungsvorrichtungsteil in entgegengesetzte Richtungen ausgerichtet und je mit einem zweiten oder ersten Verbindungsvorrichtungsteil eines benachbarten Photovoltaikmoduls verbindbar sind, um je eine zusammengesetzte Verbindungsvorrichtung zu realisieren.

Vorzugsweise überragen die ersten und zweiten Verbindungsvorrichtungsteile den Modulkörper auf derselben Seite, vorzugsweise auf einer Längsseite.

Der Modulkörper weist vorzugsweise die Form einer Platte, einer Dachpfanne, eines Dachziegels oder eines Dachsteins auf. Ferner ist der Modulkörper, wie bei Dachziegeln üblich, vorzugsweise mit wenigstens einem ersten Körperelement versehen, das formschlüssig in zweites Körperelement eines benachbarten Modulkörpers eingreifen kann. Die Photovoltaikmodule können daher in einfacher Weise in regelmässigen Abständen in gleicher Höhe sequenziell aneinandergefügt werden.

Erfindungsgemässe Photovoltaikmodule können an beliebigen Stellen eines Gebäudes oder einer Vorrichtung, auf einem Dach oder an einer Mauer oder einer Grenzvorrichtung, beispielsweise entlang einer Autobahn, mit minimalem Aufwand montiert und sofern notwendig mit Montageelementen befestigt werden. Bevorzugt werden erfindungsgemässe Photovoltaikmodule auf einer Dachlattung montiert.

Die vorteilhafte Ausgestaltung der Photovoltaikmodule und der Verbindungsvorrichtungen erlaubt es, Photovoltaikmodule sequenziell und einander überlappend beispielsweise reihenweise auf eine Dachlattung aufzulegen, wobei beim überlappenden Auflegen eines ersten Photovoltaikmoduls auf ein zweites Photovoltaikmodulen automatisch ein erstes Verbindungsvorrichtungsteil mit einem dazu korrespondierenden zweiten Verbindungsvorrichtungsteil verbunden und eine zusammengesetzte Verbindungsvorrichtung erstellt wird.

Der elektrischen Verbinder, der im Lagergehäuse gehalten ist, umfasst das erste Verbinderteil, das als Stecker oder Steckerbuchse ausgebildet ist, und das zweite Verbinderteil, das entsprechend als Steckerbuchse oder Stecker ausgebildet ist. Die Verbindungskontakte sind vorzugsweise zueinander korrespondierende Kontakte eines Steckverbinders, sodass auch die Verbindungsvorrichtungsteile in vorzugsweisen Ausgestaltungen als Steckverbinderteile, wie Stecker und Steckerbuchsen, vorliegen.

Die Verbindergehäuseteile des elektrischen Verbinders sind mittels des wenigstens eines ersten Verbindungselements und des wenigstens eines zweiten Verbindungselements formschlüssig miteinander verbindbar. Beispielsweise sind mehrere erste Verbindungselemente als elastische Rastzungen und das zweite Verbindungselement als vorzugsweise kreisförmiger Rastkragen ausgebildet, oder umgekehrt. Die elastischen Rastzungen können über den Rastkragen geführt werden und daran einrasten. Vorzugsweise ist die Verbindung zwischen den ersten und zweiten Verbindungselementen nur durch ein Werkzeug wieder lösbar, sodass die Verbindergehäuseteile nicht unbefugt voneinander gelöst werden können und kein Zugriff auf die unter Spannung stehenden elektrischen Verbindungskontakte möglich ist.

Die Lagergehäuseteile sind vorzugsweise topfförmig oder schalenförmig ausgebildet, sodass sie die Verbinderteile in den Lageröffnungen aufnehmen können. Die Verbindergehäuseteile sind vorzugsweise ebenfalls topfförmig oder schalenförmig ausgebildet. Die Lagergehäuseteile und/oder die Verbindergehäuseteile weisen vorzugsweise zumindest teilweise zylindrische Wandelemente auf, an die einseitig ein vorzugsweise ebener oder gewölbter Boden anschliesst. Eine Lagergehäuseinnenwand begrenzt dabei jeweils eine zugehörige Lageröffnung seitlich.

In vorzugsweisen Ausgestaltungen ist vorgesehen, dass die Verbindergehäuseteile dicht abschliessend miteinander verbindbar sind, um eine geforderte Schutzart, wie IP65 zu erfüllen. Vorzugsweise weisen die Verbindergehäuseteile zueinander korrespondierende erste und zweite Wandelemente auf, die vorzugsweise gegeneinander abgestuft sind, und die dicht abschliessend aneinander anliegen oder die dicht abschliessend einen Dichtungsring einschliessen. Nach der Verbindung der Verbindergehäuseteile ist das Verbindergehäuse daher dicht abgeschlossen, sodass die Verbindungskontakte vor äusseren Einwirkungen geschützt sind.

Durchgangsöffnungen oder Wandöffnungen, die in das Verbindergehäuse hinein führen und zur Durchführung einer elektrischen Leitung vorgesehen sind, sind vorzugsweise mittels einer Kabeldurchführung dicht abgeschlossen, sodass die geforderte Schutzart eingehalten wird. Durch die Kabeldurchführungen kann gleichzeitig eine geforderte Zugentlastung vorteilhaft realisiert werden. Die Kabeldurchführungen können produktspezifisch vorgesehen oder mittels marktüblicher Lösungen realisiert werden.

Zur Aufnahme der Kabeldurchführungen sind das erste und das zweite Lagergehäuseteil vorzugsweise mit je einem Anschlusskanal versehen.

Die ersten und zweiten Lagergehäuseteile und/oder die ersten und zweiten Verbinderteile, vorzugsweise die ersten und zweiten Verbindergehäuseteile, sind bei der gegenseitigen Verbindung vorzugsweise selbstzentrierend. Sofern die Verbindungsvorrichtungsteile mit einer axialen gegenseitigen Verschiebung gegeneinander geführt werden, erfolgt selbsttätig eine gegenseitige koaxiale Ausrichtung der ersten und zweiten Lagergehäuseteile und/oder der ersten und zweiten Verbindergehäuseteile, sodass die Verbindung der Verbindungsvorrichtungsteile bei der Installation der Photovoltaikmodule stets zuverlässig erfolgt.

Das erste und das zweite Lagergehäuseteil sind vorzugsweise mit zueinander korrespondierenden Führungselementen versehen, mittels denen das erste und das zweite Lagergehäuseteil in eine gegenseitige koaxiale Ausrichtung führbar und in koaxialer Ausrichtung haltbar sind. Die zueinander korrespondierenden Führungselemente sind vorzugsweise derart dimensioniert, dass die beiden Lagerteile nicht nur axial gegeneinander, sondern auch senkrecht dazu, radial gegeneinander verschiebbar sind, um Materialdehnungen auszugleichen.

Vorzugsweise weist das eine Lagergehäuseteil wenigstens einem Führungskanal und das andere Lagergehäuseteil wenigstens einen dazu korrespondierenden einteiligen oder mehrteiligen Führungszapfen auf, der frontseitig vorzugsweise gerundet, zugespitzt oder konisch ausgebildet ist.

Beim Gegeneinanderführen der beiden Lagergehäuseteile können die Führungszapfen eines Lagergehäuseteils daher auch bei nicht exakter koaxialer Ausrichtung der beiden Lagergehäuseteile in die korrespondierenden Führungskanäle des anderen Lagergehäuseteils eintreten und die beiden Lagergehäuseteile bei einer weiteren gegenseitigen Verschiebung in eine koaxiale Ausrichtung überführen.

In einer bevorzugten Ausgestaltung ist der Querschnitt der Führungszapfen kleiner als der Querschnitt der Führungskanäle, sodass ein Spiel verbleibt, welches erlaubt, Materialdehnungen zu kompensieren.

In einer weiteren bevorzugten Ausgestaltung umfasst der mehrteilige Führungszapfen wenigstens ein elastisches Element, beispielsweise ein komprimierbares elastisches Hohlzylindersegment, beispielsweise aus Gummi oder Schaumstoff, welches von einer Hülse aus Metall oder Kunststoff umschlossen ist. Die Hülse kann daher radial in jede Richtung verschoben werden, um Materialdehnungen zu kompensieren.

In einer weiteren bevorzugten Ausgestaltung umfasst der mehrteilige Führungszapfen mehrere elastische Stabelemente, die einseitig mit dem ersten oder zweiten Lagergehäuseteil verbunden und gegebenenfalls innerhalb einer Einsenkung gehalten sind.

In einer weiteren bevorzugten Ausgestaltung sind flügelförmige Federelemente vorgesehen, die zentral befestigt und mit Flügeln vorzugsweise geneigt zu einem Radius des Führungszapfens nach aussen gerichtet sind. Die Flügel definieren in der Ruhelage mit ihren Aussenseiten den Umfang des Führungszapfens, können unter Krafteinwirkung hingegen geschwenkt werden.

Durch die elastisch miteinander verbundenen Lagergehäuseteile können daher Materialdehnungen aufgefangen werden. Bei einer gegenseitigen Verschiebung der beiden Lagergehäuseteile kann sich zudem das verschiebbar gelagerte erste oder zweite Verbinderteil in der Lageröffnung des zugehörigen Lagergehäuseteils verschieben, sodass einwirkende Kräfte entsprechend kompensiert werden.

Beim Verbinden von zwei Photovoltaikmodulen erfolgt somit eine koaxiale Ausrichtung der beiden Verbindungsvorrichtungsteile durch die beiden Lagergehäuseteile. Bei diesem Vorgang werden auch die Verbinderteile koaxial oder beinahe koaxial zueinander ausgerichtet, sodass nur noch kleinere axiale Abweichungen der Verbinderteile auszugleichen sind. Dies wird durch die verschiebbare Lagerung wenigstens eines der Verbinderteile ermöglicht.

Aufgrund der verschiebbaren oder selbstzentrierenden Lagerung wenigstens des ersten oder des zweiten Verbinderteils im zugehörigen ersten oder zweiten Lagergehäuseteil und aufgrund der vorzugsweise elastischen Verbindung der beiden Lagergehäuseteile gelingt die Verbindung des ersten und des zweiten Verbindungsvorrichtungsteils besonders vorteilhaft.

Das erste oder das zweite Verbinderteil ist im zugehörigen ersten oder zweiter Lagergehäuseteil vorzugsweise in einer Ebene senkrecht zur Vorrichtungssachse vorzugsweise in einem Bereich von 1 mm - 5 mm, weiter bevorzugt in einem Bereich von 1.5 mm - 2 mm und parallel zur Vorrichtungssachse in einem Bereich von 1 mm - 10 mm, weiter bevorzugt in einem Bereich von 3 mm - 6 mm verschiebbar.

Die beiden Lagergehäuseteile sind durch die entsprechend ausgestalteten Führungselemente vorzugsweise in einem Bereich von 1 mm - 5 mm, weiter bevorzugt in einem Bereich von 1.5 mm - 2 mm gegeneinander verschiebbar.

Durch die verschiebbare Lagerung der Lagergehäuseteile und des betreffenden Verbinderteils werden zudem mechanische Verschiebungen kompensiert, die innerhalb des Photovoltaiksystems beispielsweise aufgrund von thermischen Einwirkungen und/oder weiteren Materialveränderungen auftreten.

Die verschiebbare Lagerung wird realisiert, indem zwischen der Lagergehäuseinnenwand des Lagergehäuseteils, die die Lageröffnung begrenzt, und dem zugehörigen Verbinderteil wenigstens ein elastisches Lagerelement vorgesehen wird, welches dazu vorgesehen ist, das Verbinderteil in eine zentrale Lage zurückzuführen, falls keine entgegenwirkenden Kräfte vorliegen. Das elastische Lagerelement kann beispielsweise ein elastischer Ring oder ein elastischer Hohlzylinder sein, welcher das Verbinderteil umschliesst.

In einer bevorzugten Ausgestaltung ist vorgesehen, dass das erste oder das zweite Lagergehäuseteil, welches das zugehörige Verbinderteil verschiebbar hält, mehrere vorzugsweise zungenförmige Lagerfedern aufweist, die innerhalb der betreffenden Lageröffnung gegen das zugehörige Verbinderteil geneigt oder gerichtet sind.

Alternativ kann das verschiebbar gelagerte erste oder zweite Verbinderteil mehrere vorzugsweise zungenförmige Lagerfedern aufweisen, die nach aussen gegen das zweite Lagergehäuseteil geneigt oder gerichtet sind.

Nach dem Einsetzen des zugehörigen Verbinderteils wird dieses von den Lagerfedern, die vorzugsweise über den Umfang des zugehörigen Lagergehäuseteils gleichmässig verteilt sind, daher elastisch gehalten, sodass es in dem genannten Bereich in der Ebene senkrecht zur Vorrichtungssachse verschiebbar ist.

Vorzugsweise sind die Lagerfedern nach unten in die Lageröffnung des zugehörigen Lagergehäuseteils geneigt und/oder mit entsprechend geneigten Flächen versehen, wodurch die Lagerfedern gebogen oder verdrängt werden können, wenn das zugehörige Verbinderteil in das Lagergehäuseteil eingesetzt wird.

Weiter bevorzugt ist vorgesehen, dass das erste oder das zweite Verbindergehäuseteil an der Unterseite einen vorzugsweise konisch geformten Kopplungskragen aufweist, der zur Verdrängung der Lagerfedern vorgesehen ist und der nach Passieren der Lagerfedern als Anschlag dient, an dem die Lagerfedern anschlagen, wenn das im zugehörigen Lagergehäuseteil verschiebbar gehaltene Verbinderteil nach aussen gezogen wird. Durch entsprechende Dimensionierung des Kopplungskragen kann der Bereich bestimmt werden, indem das verschiebbar gehaltene Verbinderteil in dem genannten Bereich parallel zur Vorrichtungssachse verschiebbar ist.

In weiteren bevorzugten Ausgestaltungen ist vorgesehen, dass die ersten und zweiten Verbindergehäuseteile zueinander korrespondierende erste und zweite Zentrierelemente aufweisen. Beispielsweise umfasst das erste Verbindergehäuseteil eine oder mehrere Zentrierzungen und das zweite Verbindergehäuseteil einen dazu korrespondierenden Zentrierkragen. Die Zentrierelemente weisen vorzugsweise konisch gegeneinander geneigte oder trichterförmige Zentrierflächen oder Zentriersegmente auf, die gewährleisten, dass die Verbindergehäuseteile auch bei einer gegenseitigen axialen Verschiebung sicher miteinander verbunden werden können. Vorzugsweise ist vorgesehen, dass die Verbindungselemente und die Zentrierelemente derart dimensioniert sind, dass bei einer gegenseitigen Verschiebung der Verbindergehäuseteile die Zentrierelemente vor den Verbindungselementen in gegenseitigen Kontakt gelangen und die Zentrierung somit vor der Verbindung oder Verriegelung erfolgen kann.

In weiteren vorzugsweisen Ausgestaltungen ist vorgesehen, dass das erste Verbindergehäuseteil wenigstens ein erstes Fixierelement aufweist, mittels dessen der erste Verbindungskontakt koaxial zur Vorrichtungssachse ausgerichtet gehalten ist und/oder dass das zweite Verbindergehäuseteil wenigstens ein zweites Fixierelement aufweist, mittels dessen der zweite Verbindungskontakt koaxial zur Vorrichtungssachse ausgerichtet gehalten ist.

In vorzugsweisen Ausgestaltungen ist vorgesehen, dass der erste Verbindungskontakt winkelförmig ausgebildet und mittels des wenigstens einen ersten Fixierelements mit einem Winkelteil formschlüssig und koaxial zur Vorrichtungssachse ausgerichtet gehalten ist.

In weiteren vorzugsweisen Ausgestaltungen ist vorgesehen, dass der zweite Verbindungskontakt plattenförmig und elastisch ausgebildet und mittels mehreren zweiten Fixierelementen, die als Haltezungen ausgebildet sind, koaxial zur Vorrichtungssachse ausgerichtet gehalten und vorzugsweise zentral von einer Haltefeder gestützt ist.

Nachfolgend wird die Erfindung anhand von Zeichnungen näher erläutert. Dabei zeigt:
- Fig. 1a: zwei erfindungsgemässe Photovoltaikmodule 10A, 10B, die je einen Modulkörper 9 mit wenigstens einem photovoltaischen Element aufweisen und die anhand einer erfindungsgemässen Verbindungsvorrichtung 1, die ein mit dem unteren Photovoltaikmodul 10A verbundenes erstes Verbindungsvorrichtungsteil 11 und ein mit dem oberen Photovoltaikmodul 10B verbundenes zweites Verbindungsvorrichtungsteil 12 umfasst, miteinander verbindbar sind;
- Fig. 1b: die beiden miteinander verbundenen Photovoltaikmodule 10A, 10B von Fig. 1a, die ein Photovoltaiksystem 100 bilden, mit der zusammengefügten Verbindungsvorrichtung 1, die ein Lagergehäuse 2 mit einem ersten und einem zweiten Lagergehäuseteil 21, 22 und einen im Lagergehäuse 2 angeordneten elektrischen Verbinder 3 mit einem ersten und einem zweiten Verbinderteil 31, 32 aufweist;
- Fig. 2: eines der Photovoltaikmodule von Fig. 1a mit einem verkürzten Modulkörper 9;
- Fig. 3a: eine erfindungsgemässe Verbindungsvorrichtung 1 in einer vorzugsweisen Ausgestaltung mit elektrischen Anschlussleitungen 411, 421, die durch das Lagergehäuse 2 hindurch zum elektrischen Verbinder 3 geführt sind;
- Fig. 3b: die Verbindungsvorrichtung 1 von Fig. 3a von der Rückseite mit Kabeldurchführungen 41, 42, durch die hindurch die elektrischen Anschlussleitungen 411, 421 zum elektrischen Verbinder 3 geführt sind;
- Fig. 4a: die Verbindungsvorrichtung 1 von Fig. 3a von oben mit dem unteren ersten Verbindungsvorrichtungsteil 11, das das erste Lagergehäuseteil 21 des Lagergehäuses 2 und darin das erste Verbinderteil 31 des elektrischen Verbinders 3 umfasst, und, davon getrennt, mit dem oberen zweiten Verbindungsvorrichtungsteil 12, das das zweite Lagergehäuseteil 22 des Lagergehäuses 2 und darin das zweite Verbinderteil 32 des elektrischen Verbinders 3 umfasst;
- Fig. 4b: das erste Lagergehäuseteil 21 von Fig. 4a vereinzelt, das mehrere Lagerfedern 211 aufweist, die in eine erste Lageröffnung 210 hineinragen und mittels denen das erste Verbinderteil 31 des elektrischen Verbinders 3 in Fig. 4a verschiebbar gehalten ist und das mit zwei Führungskanälen 215 versehen ist, in die am zweiten Lagergehäuseteil 22 vorgesehene Führungszapfen 225 eingeführt werden können, um die beiden Lagergehäuseteile 21, 22 koaxial zueinander auszurichten;
- Fig. 5a: die Verbindungsvorrichtung 1 von Fig. 4a von unten mit Blick auf das zweite Verbinderteil 32 des elektrischen Verbinders 3, das im zweiten Lagergehäuseteil 22 gehalten ist;
- Fig. 5b: das zweite Lagergehäuseteil 22 von Fig. 5a vereinzelt mit zwei vorzugsweise elastischen oder elastisch gehaltenen Führungszapfen 225, die in die Führungskanäle 215 des ersten Lagergehäuseteils 21 einsetzbar sind;
- Fig. 5c: das zweite Lagergehäuseteil 22 von Fig. 5b vereinzelt mit mehrteiligen Führungszapfen 225, die je mehrere elastische Führungsstäbe 2252 aufweisen;
- Fig. 6: die zusammengesetzte Verbindungsvorrichtung 1 von Fig. 3a mit dem Lagergehäuse 2 und dem elektrischen Verbinder 3 in einem Viertelschnitt;
- Fig. 7: den elektrischen Verbinder 3 von Fig. 6 ohne das Lagergehäuse 2;
- Fig. 8a: den elektrischen Verbinder 3 von Fig. 7 während des Zusammenfügens des ersten und des zweiten Verbinderteils 31, 32 in einer Position, in der das zweite Verbindergehäuseteil 322 des zweiten Verbinderteils 32 gegenüber dem ersten Verbindergehäuseteil 312 des ersten Verbinderteils 31 koaxial ausgerichtet wird;
- Fig. 8b: den elektrischen Verbinder 3 von Fig. 8a nach dem formschlüssigen gegenseitigen Verrasten der beiden Verbindergehäuseteile 312, 322;
- Fig. 9: das erste Verbindungsvorrichtungsteil 11 von Fig. 7 von oben mit dem ersten Lagergehäuseteil 21 und dem ersten Verbinderteil 31;
- Fig. 10a: das erste Lagergehäuseteil 21 von Fig. 9 geschnitten entlang der Linie A--A von Fig. 9 und das erste Verbinderteil 31, das von oben in das erste Lagergehäuseteil 21 eingesetzt wird; und
- Fig. 10b: das erste Lagergehäuseteil 21 von Fig. 10a und das darin eingesetzte erste Verbinderteil 31.

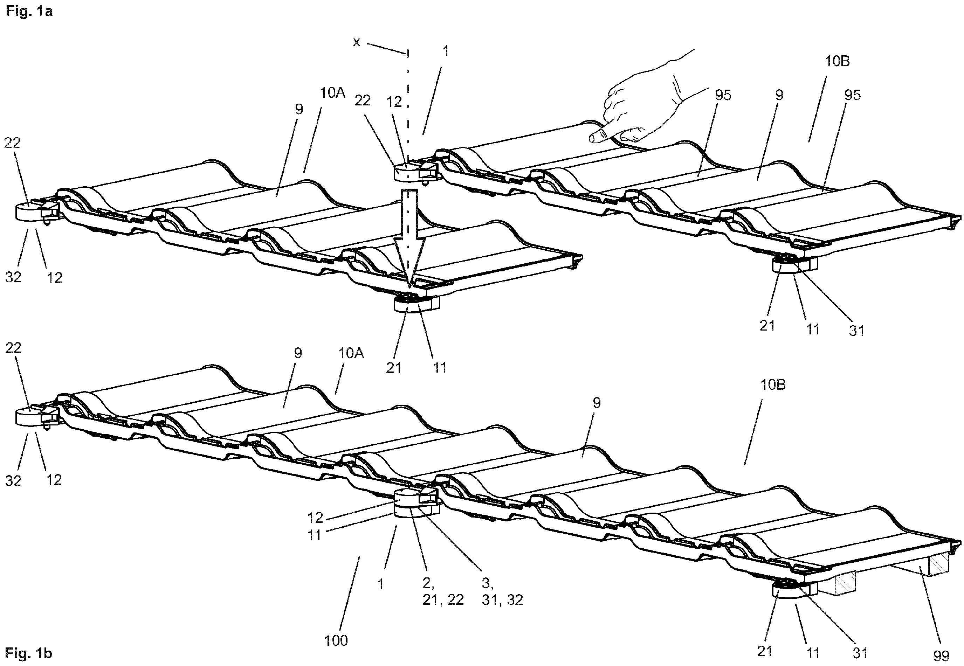

Fig. 1a zeigt zwei erfindungsgemässe Photovoltaikmodule 10A, 10B, die je einen Modulkörper 9 mit wenigstens einem photovoltaischen Element aufweisen und die anhand einer erfindungsgemässen Verbindungsvorrichtung 1, die ein mit dem unteren Photovoltaikmodul 10A verbundenes erstes Verbindungsvorrichtungsteil 11 und ein mit dem oberen Photovoltaikmodul 10B verbundenes zweites Verbindungsvorrichtungsteil 12 aufweist, miteinander verbunden werden.

Der Modulkörper 9 der Photovoltaikmodule 10A, 10B weist in diesem Ausführungsbeispiel die Form einer Reihe von Dachziegeln auf. Der Modulkörper 9 kann aus unterschiedlichen Materialien, beispielsweise aus Ton, Keramik oder Leichtmetall gefertigt werden. Die photovoltaischen Elemente 95 können auf den Modulkörper 9 aufgelegt oder in diesen integriert sein. Beispielsweise ist der Modulkörper 9 aus Ton gefertigt und mit plattenförmigen photovoltaischen Elemente 95 bestückt, die auf den Modulkörper 9 aufgelegt oder in Führungsbahnen eingeschoben werden. Die Anzahl der Dachziegel, die in einen Modulkörper 9 integriert sind, kann unter Berücksichtigung des Gewichts, der Handhabbarkeit, der Lagerbarkeit und der Eignung zur Installation der Photovoltaikmodule beliebig gewählt werden.

Die Photovoltaikmodule 10A, 10B überlappen einander an den einander zugewandten Enden, sodass die einander zugewandten Verbindungsvorrichtungsteile 11, 12 koaxial entlang einer Vorrichtungssachse x zueinander ausgerichtet sind und in der Funktion als Stecker und Steckerbuchse ineinander verschoben werden können, um die elektrische Verbindung zwischen den Photovoltaikmodulen 10A, 10B zu erstellen. Die einander zugewandten Endstücke der Modulkörper 9 greifen dabei vorzugsweise formschlüssig ineinander ein.

In den nachstehend gezeigten Ausgestaltungen der Erfindung erfüllt das erste Verbindungsvorrichtungsteil 11 die Funktion des Steckers und das zweite Verbindungsvorrichtungsteil 12 die Funktion der Steckerbuchse. Die Funktionen sind jedoch austauschbar.

Fig. 1b zeigt die beiden miteinander verbundenen Photovoltaikmodule 10A, 10B von Fig. 1a, die aufgelegt auf einer Dachlattung 99 ein Photovoltaiksystem 100 bilden. Die zusammengefügten Verbindungsvorrichtungsteile 11, 12 bilden nun die Verbindungsvorrichtung 1, die ein Lagergehäuse 2 mit einem ersten und einem zweiten Lagergehäuseteil 21, 22 und einen im Lagergehäuse 2 angeordneten elektrischen Verbinder 3 mit einem ersten und einem zweiten Verbinderteil 31, 32 umfasst und die die beiden Photovoltaikmodule 10A, 10B elektrisch miteinander verbindet. Die sich überlappenden Modulkörper 9 bilden nun eine einheitliche Reihe von acht Dachziegeln, die aus der Entfernung nicht von konventionellen Dachziegeln unterschieden werden können. Photovoltaikmodule 10A, 10B mit einer Dachziegelstruktur bilden daher eine besonders bevorzugte Ausgestaltung der Erfindung. In gleicher Weise können hingegen auch plattenförmige Photovoltaikmodule mit erfindungsgemässen Verbindungsvorrichtungen 1 miteinander verbunden werden.

Die Figuren 1a und 1b zeigen, dass die Photovoltaikmodule 10A, 10B an den Enden, die den zu einer Verbindungsvorrichtung 1 zusammengefügten Verbindungsvorrichtungsteile 11, 12 gegenüber liegen, je mit einem weiteren Verbindungsvorrichtungsteil 12 bzw. 11 derart versehen sind, so dass jedes der Photovoltaikmodule 10A, 10B ein erstes Verbindungsvorrichtungsteil 11 und ein zweites Verbindungsvorrichtungsteil 12 aufweist, die in einander entgegengesetzten Richtungen vorzugsweise senkrecht zur Ebene des zugehörigen Modulkörpers 9 ausgerichtet sind.

Fig. 1b zeigt, dass die Verbindungsvorrichtungsteile 11, 12 der in einer Reihe zusammengefügten Photovoltaikmodule 10A, 10B die Modulkörper 9 auf der dem Betrachter zugewandten Frontseite überragen. Sobald zusammengefügte Photovoltaikmodule 10A, 10B eine gesamte Länge des Daches überdecken, kann eine nächste Reihe erstellt werden, die mit der Rückseite die Frontseite der zuvor erstellten Ziegelreihe überlappt und die miteinander verbundenen Verbindungsvorrichtungsteile 11, 12 überdeckt.

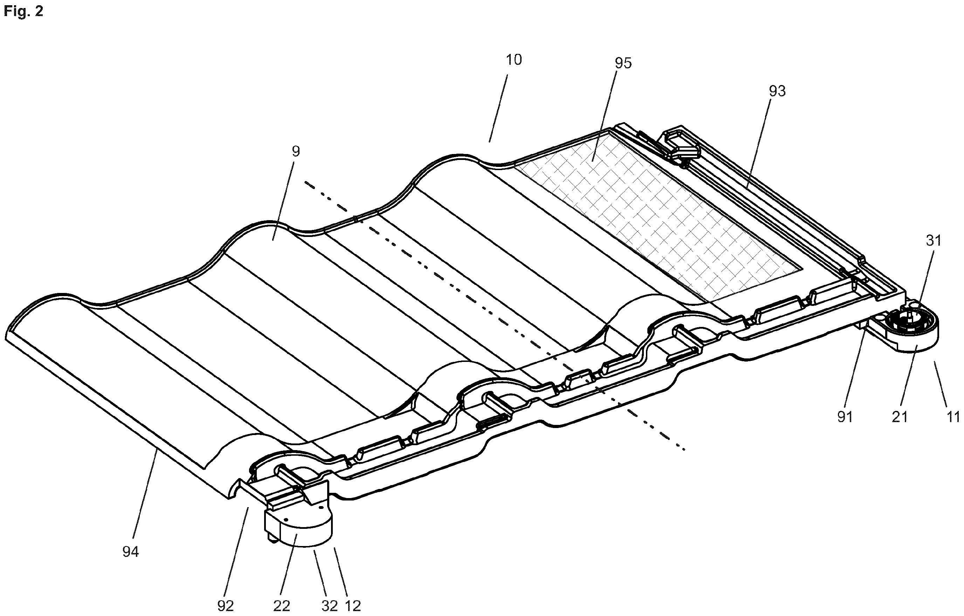

Fig. 2 zeigt eines der Photovoltaikmodule 10 von Fig. 1a mit einem verkürzten Modulkörper 9. Mit der strichpunktierten Linie ist symbolisiert, dass Modulkörper 9 beliebig geschnitten, erweitert oder verkürzt sein können, um Photovoltaikmodule 10 mit der gewünschten Grösse bereitzustellen. Ein photovoltaisches Element 95 in Form einer rechteckigen Platte ist in schraffierter Darstellung gezeigt

Es ist gezeigt, dass die Modulkörper 9 Aufnahmeformen 91, 92 aufweisen, in die die Verbindungsvorrichtungsteile 11, 12 bzw. deren Lagergehäuseteile 21, 22 eingesetzt werden können. Vorzugsweise sind die Aufnahmeformen 91, 92 und die Lagergehäuseteile 21, 22 komplementär zueinander ausgebildet, sodass sie beispielsweise formschlüssig aneinander angepasst sind und/oder vorzugsweise ineinander einrastbar sind. Die Verbindungsvorrichtungsteile 11, 12 können jedoch auf beliebige andere Weise, beispielsweise durch zusätzliche Montagemittel mit dem Modulkörper 9 verbunden oder am Modulkörper 9 fixiert sein.

Gezeigt sind ferner am Modulkörper 9 seitlich vorgesehene Abschlussteile 93, 94, die dazu korrespondierende Abschlussteile 94, 93 benachbarter Modulkörper 9 überlappen und formschlüssig darin eingreifen können.

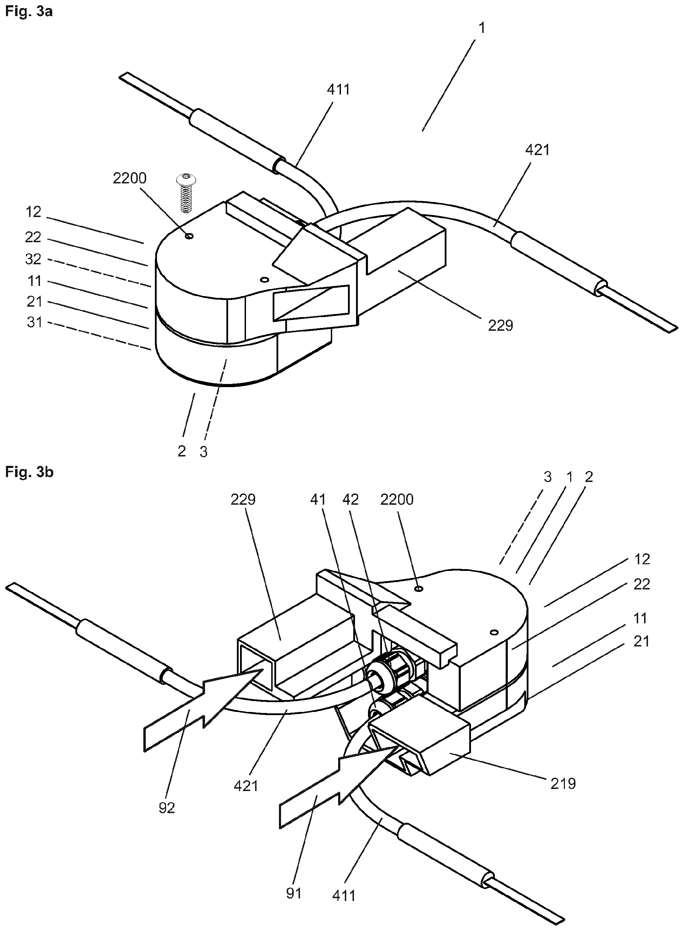

Fig. 3a zeigt eine erfindungsgemässe Verbindungsvorrichtung 1 mit zusammengefügten Verbindungsvorrichtungsteilen 11, 12 in einer vorzugsweisen Ausgestaltung mit elektrischen Anschlussleitungen 411, 421, die durch das Lagergehäuse 2 hindurch zu einem elektrischen Verbinder 3 geführt sind. Der elektrische Verbinder 3, der ein erstes und ein zweites Verbinderteil 31, 32 umfasst, ist durch die zusammengefügten Lagergehäuseteile 21, 22 des Lagergehäuses 2 abgedeckt.

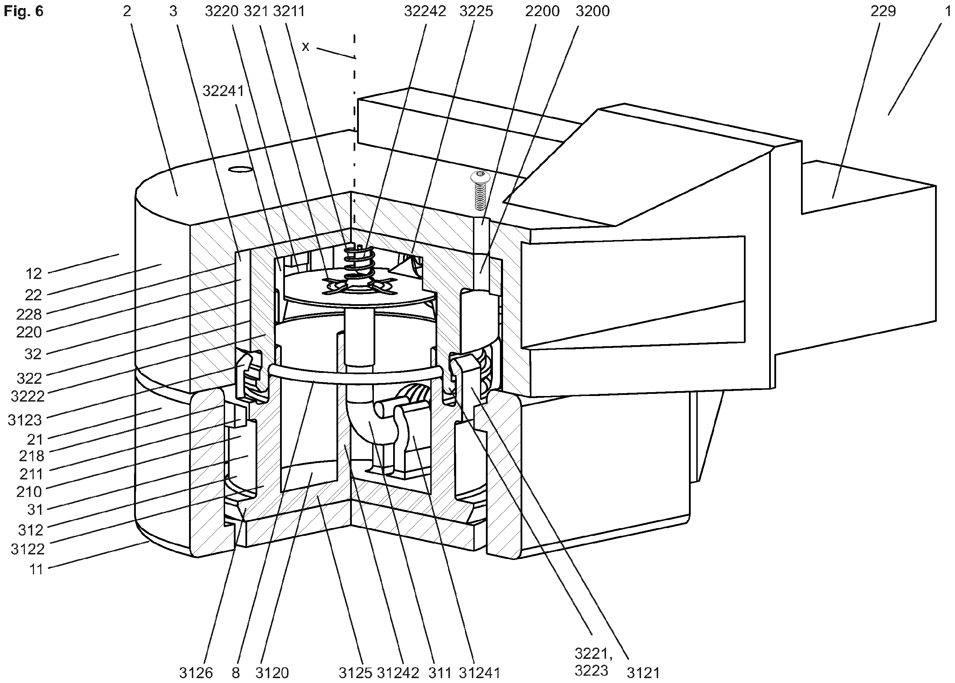

Wie dies nachstehend beschrieben ist, ist das erste Verbinderteil 31 im ersten Lagergehäuseteil 21 verschiebbar gelagert. Das zweite Verbinderteil 32 ist im zweiten Lagergehäuseteil 22 vorzugsweise fest montiert. Durch eine Montageöffnung 2200 im zweiten Lagergehäuseteil 22 ist beispielsweise eine Montageschraube einführbar, mittels der das zweite Verbinderteil 32 bzw. das zweite Verbindergehäuseteil 322 fixierbar ist (siehe Fig. 6).

Die Anschlussleitungen 411, 421 sind aus der Verbindungsvorrichtung 1 herausgeführt und mit den photovoltaischen Elementen 95 der Photovoltaikmodule 10A, 10B verbunden (siehe Fig. 2).

Gezeigt ist ferner das Montageteil 229 des zweiten Lagergehäuseteils 22, das mit dem zugehörigen Modulkörper 9 vorzugsweise formschlüssig und/oder kraftschlüssig verbindbar ist.

Fig. 3b zeigt die Verbindungsvorrichtung 1 von Fig. 3a von der Rückseite mit Kabeldurchführungen 41, 42, durch die hindurch die elektrischen Anschlussleitungen 411, 421 zum elektrischen Verbinder 3 geführt sind. Dabei sind produktspezifische oder konventionelle Kabeldurchführungen einsetzbar, wie sie beispielsweise aus der EP1710886B1, der EP2479857B1 oder der EP2688169A1 bekannt sind.

Diese Perspektive zeigt ferner das erste Montageteil 219 des ersten Lagergehäuseteils 21 und das zweite Montageteil 229 des zweiten Lagergehäuseteils 22, die Vierkantrohre bilden, die in eine entsprechende Aufnahmeform 91, 92 des zugehörigen Modulkörpers 9 eingreifen können und/oder in die eine entsprechende Aufnahmeform 91, 92 des zugehörigen Modulkörpers 9 eingreifen kann. Sofern die Aufnahmeformen 91, 92 quaderförmige Elemente mit einem Aussenquerschnitt bilden, welcher dem Innenquerschnitt der Montageteile 219, 229 entspricht, zu können die quaderförmigen Aufnahmeformen 91, 92 in die Montageteile 219, 229 hinein verschoben werden. Die Verbindungsvorrichtungsteile 11, 12 können daher in einfacher Weise auf die Modulkörper 9 aufgesteckt werden.

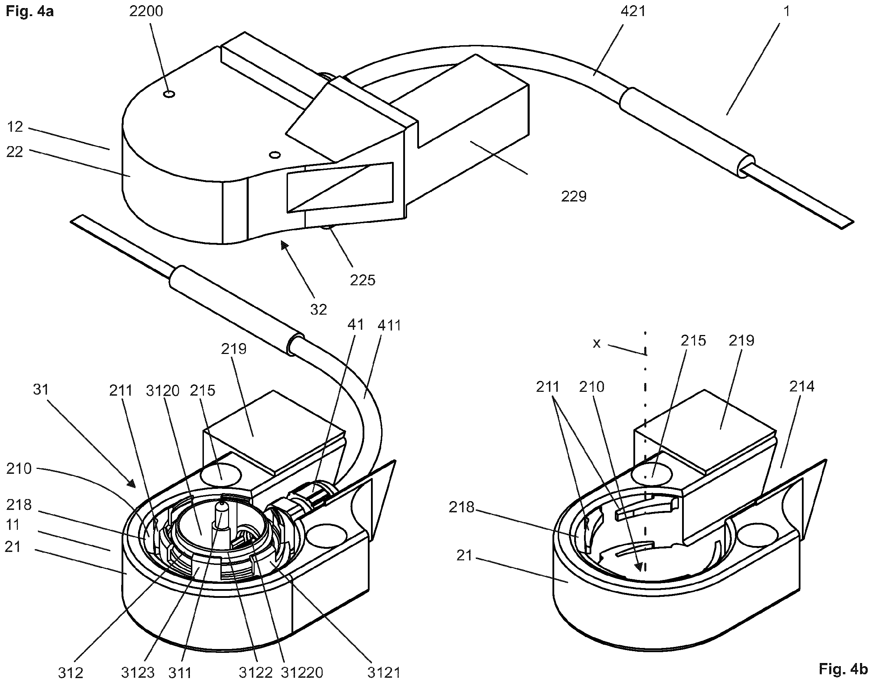

Fig. 4a zeigt die Verbindungsvorrichtung 1 von Fig. 3a von oben mit dem unteren ersten Verbindungsvorrichtungsteil 11, das das erste Lagergehäuseteil 21 des Lagergehäuses 2 und darin das erste Verbinderteil 31 des elektrischen Verbinders 3 umfasst, und, davon getrennt, mit dem oberen zweiten Verbindungsvorrichtungsteil 12, das das zweite Lagergehäuseteil 22 des Lagergehäuses 2 und darin das zweite Verbinderteil 32 des elektrischen Verbinders 3 umfasst.

Das erste Verbinderteil 31 ist in eine Lageröffnung 210 des ersten Lagergehäuseteils 21 eingesetzt und darin mittels mehreren elastischen Lagerelementen 211 verschiebbar und elastisch gelagert. Die Lagerelemente 211 sind als Lagerfedern ausgebildet, die an der Lagergehäuseinnenwand 218, welche die Lageröffnung 210 umschliesst, angeformt sind, und elastisch deformiert werden können, bis sie an die Lagergehäuseinnenwand 218 anliegen. Alternativ können die Lagerfedern 211 auch am Verbindergehäuseteil 312 angeformt und gegen die Lagergehäuseinnenwand 218 geneigt sein.

Das erste Verbinderteil 31 umfasst ein erstes Verbindergehäuseteil 312 und darin einen als Steckerkontakt oder Steckstift ausgebildeten ersten Verbindungskontakt 311. Der erste Verbindungskontakt 311 ist mit der ersten Anschlussleitung 411 verbunden, die dicht abschliessend durch eine Durchgangsöffnung 31220 im ersten Verbindergehäuseteil 312 bzw. durch eine zylindrische Wand 3122 des ersten Verbindergehäuseteils 312 in dieses hinein geführt ist.

Hinsichtlich der dicht abgeschlossenen Durchgangsöffnung 31220 sind die Verbindungskontakte 311, 321 des elektrischen Verbinders 3 gegen äussere Einwirkungen geschützt. Die vorgesehene Kabeldurchführung 41 dient ferner zur Fixierung der zugehörigen ersten Anschlussleitung 411 und somit als Zugentlastung, die verhindert, dass über die erste Anschlussleitung 411 Zugkräfte auf den ersten Anschlusskontakt 311 einwirken können.

Weiterhin ist gezeigt, dass das erste Lagergehäuseteil 21 mit zwei Führungskanälen 215 versehen ist, in die am zweiten Lagergehäuseteil 22 vorgesehene Führungszapfen 225 eingreifen können, um die beiden Lagergehäuseteile 21, 22 koaxial zueinander auszurichten und vorzugsweise mit einem Spiel in dieser Ausrichtung zu halten.

Fig. 4a zeigt ferner, dass die zylindrische Wand 3122 des ersten Verbindergehäuseteils 312, die eine erste Kontaktkammer 3120 begrenzt, von drei kürzeren zungenförmigen ersten Verbindungselementen 3121 und drei längeren zungenförmigen ersten Zentrierelementen 3123 umgeben ist, die alternierend in einem Umkreis angeordnet sind. Nachstehend ist beschrieben, dass die Zentrierelemente 3123 dazu dienen, die Verbinderteile 31, 32 gegeneinander koaxial auszurichten, während die Verbindungselemente 3121 dazu dienen, die Verbinderteile 31, 32 formschlüssig und vorzugsweise derart miteinander zu verbinden, dass sie nur noch mittels eines Werkzeugs voneinander getrennt werden können.

Fig. 4b zeigt das erste Lagergehäuseteil 21 von Fig. 4a vereinzelt, das mehrere Lagerfedern 211 aufweist, die in eine erste Lageröffnung 210 hineinragen und mittels denen das erste Verbinderteil 31 des elektrischen Verbinders 3 in Fig. 4a verschiebbar gehalten ist. Die fünf Lagerfedern 211 sind zungenförmig ausgebildet und sind im Gegenuhrzeigersinn und vorzugsweise nach unten ausgerichtet oder an der Oberseite mit geneigten Flächen versehen, sodass sie beim Einsetzen des ersten Verbinderteils 31 radial nach aussen verdrängt werden können.

Die Lagerfedern 211 und das erste Verbindergehäuseteil 312 sind derart dimensioniert, dass das in das erste Lagergehäuseteil 21 eingesetzte erste Verbindergehäuseteil 312 unter Spannung vorzugsweise in der Mitte oder koaxial zur Vorrichtungssachse x gehalten wird. Unter Krafteinwirkung kann das erste Verbinderteil 31 daher radial nach aussen verschoben werden. Vorzugsweise ist eine radiale Verschiebung in einem Bereich von 1 mm - 5 mm, weiter bevorzugt in einem Bereich von 1.5 mm - 2 mm möglich.

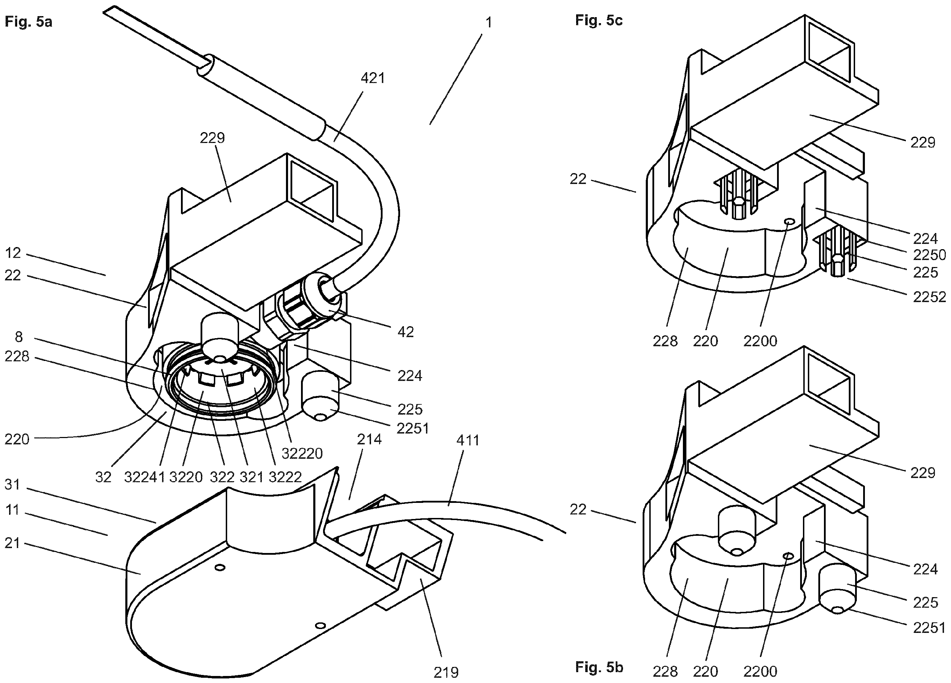

Fig. 5a zeigt die Verbindungsvorrichtung 1 von Fig. 4a von unten mit Blick auf das zweite Verbinderteil 32 des elektrischen Verbinders 3, das in der zweiten Lageröffnung 220 des zweiten Lagergehäuseteils 22 gehalten ist.

Das zweite Verbinderteil 32 umfasst ein zweites Verbindergehäuseteil 322 mit einem zweiten zylindrischen Wandelement 3222, welches eine zweite Kontaktkammer 3220 umschliesst und eine Wandöffnung oder Durchgangsöffnung 32220 aufweist. Durch die Wandöffnung 32220 ist die zweite Anschlussleitung 421 mittels der zweiten Kabeldurchführung 42 zum zweiten Verbindungskontakt 321 in der zweiten Kontaktkammer 3220 hinein geführt. Der zweite Verbindungskontakt 321 ist in dieser vorzugsweisen Ausgestaltung eine Kreisplatte, die von mehreren zungenförmigen oder klammerförmigen Fixierelementen 32241 koaxial zur Vorrichtungssachse x fest oder elastisch gehalten ist. Der plattenförmige Verbindungskontakt 321 kann daher von unten in die zweite Kontaktkammer 3220 eingeschoben und an den Fixierelementen 32241 verrastet werden.

Frontseitig ist das zweite Wandelement 3222 von einem Dichtungsring 8 umschlossen, welcher eine dichte Verbindung zwischen dem ersten Wandelement 3122 des ersten Verbindergehäuseteils 312 und dem zweiten Wandelement 3222 des zweiten Verbindergehäuseteils 322 gewährleistet (siehe auch Fig. 6).

Ferner sind die zweiten Führungselemente oder Führungszapfen 225 des zweiten Lagergehäuseteils 22 gezeigt, die konisch ausgebildete Frontstücke 2251 aufweisen, die auch bei nicht koaxialer Ausrichtung zu den Führungskanälen 215 (siehe Fig. 4b) in diese eintreten und die beiden Lagergehäuseteile 21, 22 praktisch automatisch koaxial zueinander ausgerichteten können.

Fig. 5b zeigt das zweite Lagergehäuseteil 22 vereinzelt mit Blick in die Lageröffnung 220 hinein. Die vorzugsweise elastischen oder elastisch gelagerten Lagerzapfen 225 können einteilig oder mehrteilig ausgebildet sein, und sind vorzugsweise zumindest teilweise einstückig mit dem zweiten Lagergehäuseteil 22 verbunden, sodass sie vorteilhaft gefertigt werden können. Beispielsweise umfassen die Lagerzapfen 225 ein hohlzylindrisches elastisches Element, das von einer Hülse umschlossen ist, die vorzugsweise mit einem konischen Teil 2251 versehen ist.

Fig. 5c zeigt das zweite Lagergehäuseteil 22 von Fig. 5b vereinzelt mit mehrteiligen Führungszapfen 225, die je mehrere voneinander beanstandete elastische Führungsstäbe 2252 aufweisen, die an der Oberseite vorzugsweise einstückig mit dem zweiten Lagergehäuseteil 22 verbunden sind. Vorzugsweise verlaufen die Führungsstäbe 2252 in eine Einsenkung 2250, in der sie vorzugsweise einstückig mit dem Lagergehäuseteil 22 verbunden sind.

Die radial nach aussen gerichteten Aussenseiten der Führungsstäbe 2252 bilden Oberflächensegmente der Führungszapfen 225 von Fig. 5b, weshalb die gegenseitige Zentrierung oder koaxiale Ausrichtung der beiden Lagergehäuseteile 21, 22 in gleicher Weise möglich ist, wie mit den Führungszapfen 225 von Fig. 5b. Nachdem die beiden Lagergehäuseteile 21, 22 derart miteinander verbunden wurden und eine Kontaktfläche bilden, erlauben die Führungsstäbe 2252 eine gegenseitige Verschiebung, da sie nicht auf der Höhe der Kontaktfläche, sondern innerhalb der Einsenkung 2250 verankert sind.

Während die Führungsstäbe 2252 flügelförmig ausgebildet und zentral befestigt sind, kann auf die Einsenkung 2250 verzichtet werden.

Fig. 6 zeigt die zusammengesetzte Verbindungsvorrichtung 1 von Fig. 3a mit dem ersten und zweiten Verbindungsvorrichtungsteil 11, 12, dem Lagergehäuse 2 mit den ersten und zweiten Lagergehäuseteilen 21, 22 und dem elektrischen Verbinder 3 mit den ersten und zweiten Verbinderteilen 31, 32 und den ersten und zweiten Verbindergehäuseteilen 312, 322, die formschlüssig und manuell nicht lösbar miteinander verbunden sind.

Die beiden Lagergehäuseteile 21, 22 und die beiden Verbindergehäuseteile 312, 322 weisen je einen Viertelschnitt auf und sind mit unterschiedlichen Schraffuren gezeigt.

Die beiden Lagergehäuseteile 21, 22 sind durch die zueinander korrespondierenden Führungselemente 215, 225, die Führungskanäle 215 und die Führungszapfen 225, koaxial zueinander ausgerichtet miteinander verbunden und koaxial gegeneinander verschiebbar. Vorzugsweise ist ein Spiel zwischen den Führungselementen 215, 225 vorgesehen, welches eine gegenseitige radiale Verschiebung der Lagergehäuseteile 21, 22.

Das erste Verbinderteil 31 ist mittels der Lagerfedern 211 in der Lageröffnung 210 des ersten Lagergehäuseteils 21 in entsprechenden Bereichen radial und axial bezüglich der Vorrichtungssachse x verschiebbar gehalten. Eine der zungenförmigen Lagerfedern 211 ist gezeigt, die das erste Verbinderteil 31 elastisch und verschiebbar hält.

Das topfförmig oder tassenförmig ausgebildete erste Verbindergehäuseteil 312 umfasst die erste Wandlung 3122 und ein erstes Bodenelement 3125, die die erste Kontaktkammer 3120 begrenzen. Das Bodenelement 3125 ist von einem radial nach aussen ragenden Kopplungskragen 3126 umschlossen, der sich nach unten konisch verjüngt. Beim Einsetzen des ersten Verbinderteils 31 kann der Kopplungskragen 3126 die Lagerfedern 211 daher nach aussen verdrängen bis er in die Lageröffnung 210 eingetreten ist und die Lagerfedern 211 wieder zurück schwenken und in der Folge verhindern, dass der Kopplungskragen 3126 die Lagerfedern 211 nach oben wieder passieren kann. Das erste Verbinderteil 31 kann daher durch Biegung der Lagerfedern 211 radial in eine Richtung nach aussen und axial parallel zur Vorrichtungssachse x nach oben verschoben werden, bis der Kopplungskragen 3126 an den Lagerfedern 211 anstösst.

Der in der ersten Kontaktkammer 3120 gehaltene winkelförmigen erste Verbindungskontakt ist eingangsseitig von einer Halteklammer 31241 und zentral von einem Wandsegment 31242 koaxial zur Vorrichtungssachse x gehalten.

Das zweite Verbinderteil 32 ist in der Lageröffnung 220 des zweiten Lagergehäuseteils 22 gehalten und beispielsweise mittels Schraubverbindungen mit dem zweiten Lagergehäuseteil 22 koaxial zur Vorrichtungssachse x ausgerichtet unverschiebbar gehalten. Es ist gezeigt, dass das zweite Lagergehäuseteil 22 und das zweite Verbindergehäuseteil 322 zueinander korrespondierende Montageöffnungen oder Montagebohrungen, gegebenenfalls Gewindebohrungen oder Montageöffnungen mit wenigstens einer Gewindehülse aufweisen, in die Montageschrauben einsetzbar sind.

Das topfförmig oder tassenförmig ausgebildete zweite Verbindergehäuseteil 322 umfasst das zweite zylindrische Wandelement 3222 und ein zweites Bodenelement 3225, die die zweite Kontaktkammer 3220 begrenzen. In der zweiten Kontaktkammer 3220 ist der plattenförmige zweite Verbindungskontakt 321 mittels den zungenförmigen oder klammerförmigen Fixierelementen 32241 und zentral mittels einer von einem Zapfen gehaltenen Druckfeder 32242 elastisch gehalten.

Der erste Verbindungskontakt 311 ist in Kontakt mit dem zweiten Verbindungskontakt 321, weshalb die elektrische Verbindung zwischen den Anschlussleitungen 411, 421 erstellt ist.

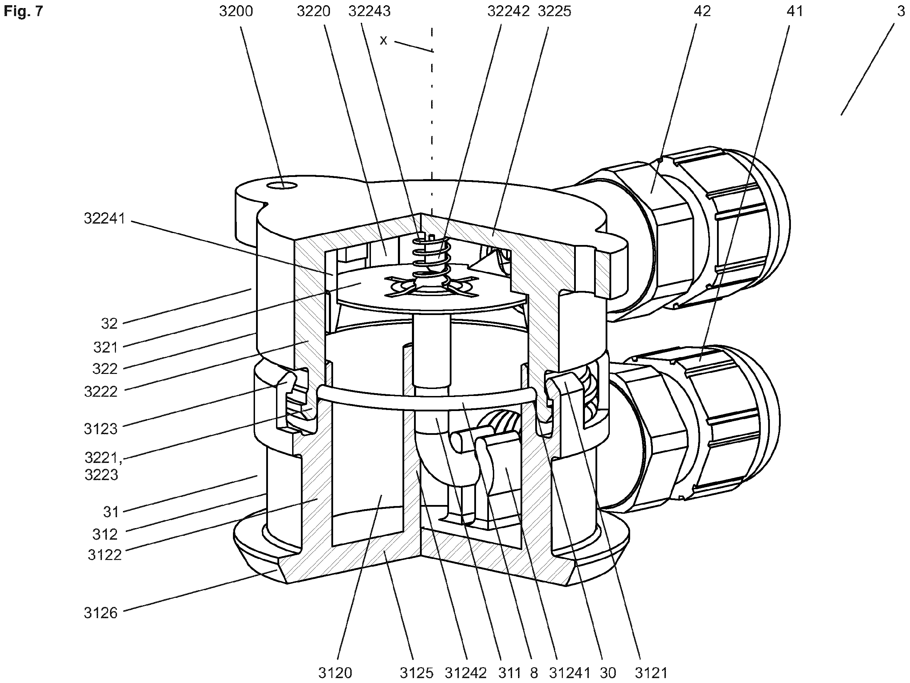

Die einander zugewandten Endstücke der zylindrischen ersten und zweiten Wandelemente 3122, 3222 liegen überlappend aneinander an und sind derart abgestuft, dass sie eine Ringkammer 30 (siehe Fig. 7) begrenzen, in der ein Dichtungsring 8 vorzugsweise unter Anpressdruck gehalten ist, sodass eine dicht abschliessende Verbindung zwischen dem ersten und dem zweiten Verbindergehäuseteil 312, 322 resultiert. Die beiden Kontaktkammern 3120, 3220 sind daher nach aussen dicht abgeschlossen, sodass die Verbindungskontakte 311, 321 gegen äussere Einwirkungen geschützt sind.

Weiter ist gezeigt, dass die beiden Verbindunggehäuseteile 312, 322 zueinander korrespondierende Verbindungselemente 3121, 3221 aufweisen, die formschlüssig ineinander eingreifen, sodass die beiden Verbinderteile 31, 32 manuell nicht voneinander lösbar sind. Das erste Verbindergehäuseteil 312 weist mehrere zungenförmige erste Verbindungselemente 3121 auf, die das zweite Verbinderteil 3221 übergreift und hält. Das zweite Verbinderteil 3221 ist als umlaufender Kopplungskragen an der Unterseite des zweiten Wandelements 3222 angeformt und weist beispielsweise eine umlaufende Stufe oder Rippe auf, die von den ersten Verbindungselementen 3121 übergriffen wird.

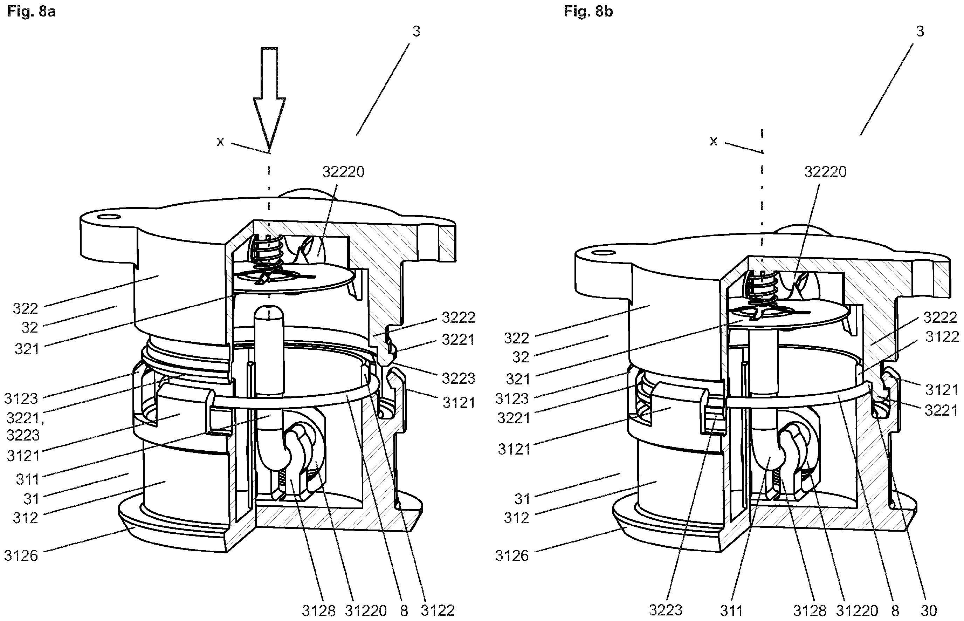

Der Kopplungskragen 3221 dient gleichzeitig als Zentrierkragen 3223 und weist somit eine Doppelfunktion auf. Die Zentrierfunktion zur koaxiale Ausrichtung der Verbinderteile 31, 32 während der Verbindung, die anhand der Zentrierelemente 3123, 3223 erfolgt, wird mit Bezug zu Fig. 8a beschrieben.

Fig. 7 zeigt den elektrischen Verbinder 3 von Fig. 6 ohne das Lagergehäuse 2.

Fig. 8a zeigt den elektrischen Verbinder 3 von Fig. 7 während des Zusammenfügens des ersten und des zweiten Verbinderteils 31, 32 in einer Position, in der das zweite Verbindergehäuseteil 322 des zweiten Verbinderteils 32 gegenüber dem ersten Verbindergehäuseteil 312 des ersten Verbinderteils 31 koaxial ausgerichtet wird. In dieser Position sind die Zentrierelemente 3123 und 3223, die aneinander anliegende konische Stirnflächen oder Stirnflächensegmente aufweisen, in gegenseitigem Kontakt. Die ersten Zentrierelemente 3123 sind zungenförmig ausgebildet liegen mit ihren konischen Stirnflächensegmenten an der konisch verlaufenden Stirnseite des zweiten Zentrierelements 3223 an, das als Zentrierkragen ausgebildet ist. Es ist ersichtlich, dass die ersten zungenförmigen Zentrierelemente 3123 länger sind als die zungenförmigen Verbindungselemente 3121, sodass gewährleistet ist, dass zuerst die Zentrierfunktion und erst anschliessend die Verbindungsfunktion erfüllt wird.

Fig. 8b zeigt den elektrischen Verbinder 3 von Fig. 8a nach dem formschlüssigen gegenseitigen Verrasten der beiden Verbindergehäuseteile 312 und 322 und somit auch den elektrischen Verbinder 3 von Fig. 7, jedoch nach einer Drehung.

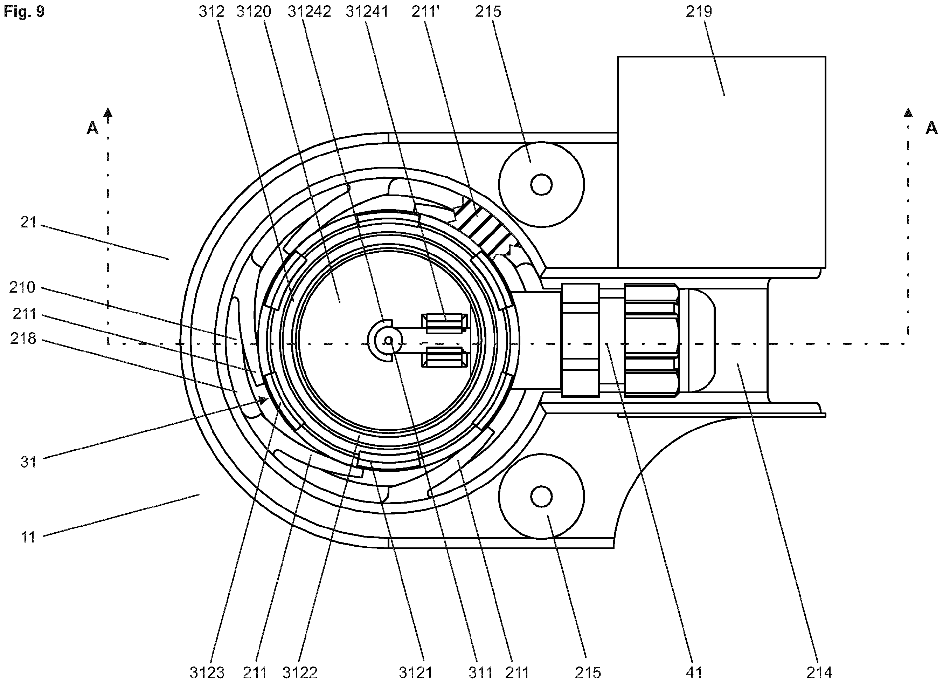

Fig. 9 zeigt das erste Verbindungsvorrichtungsteil 11 von Fig. 7 von oben mit dem ersten Lagergehäuseteil 21 und dem ersten Verbinderteil 31 mit Blick auf den von den Fixierelementen 31241, 31242 in der ersten Kontaktkammer 3120 koaxial zur Verbindungsachse x ausgerichtet gehaltenen ersten Verbindungskontakt 311.

Zwischen dem Verbindergehäuseteil 312 des ersten Verbinderteils 31 und der Lagergehäuseinnenwand 218, die die Lageröffnung 210 des ersten Lagergehäuseteils 21 seitlich umschliesst, ist wenigstens ein elastisches Lagerelement 211, 211' vorgesehen, mittels dessen, das erste Verbinderteil 31 innerhalb der Lageröffnung 210 verschiebbar und elastisch gehalten ist. Das wenigstens eine elastische Lagerelement 211, 211' kann auf verschiedene Weise realisiert werden oder in unterschiedlichen Ausgestaltungen vorliegen.

In einer bevorzugten Ausgestaltung wird das erste Verbinderteil 31 mittels beispielsweise fünf zungenförmigen Lagerfedern 211 zentral gehalten, kann unter Krafteinwirkung jedoch radial um das vorgesehene Mass in jede Richtung ausgelenkt werden. Der erste Anschlusskanal 214, in dem die Kabeldurchführung 41 gehalten ist, ist genügend gross gewählt, sodass die Kabeldurchführung 41 die Bewegung des ersten Verbinderteils 31 nicht behindert. Die Lagerfedern 211 sind an der Lagergehäuseinnenwand 218 vorzugsweise einstückig angeformt.

Die Lagerfedern 211 können ferner am ersten Verbindergehäuseteil 312 angeformt sein und gegen die Lagergehäuseinnenwand 218 des Lagergehäuseteils 21 ausgerichtet sein. Jede der Lagerfedern 211 kann so weit gebogen werden, bis sie an der Lagergehäuseinnenwand 218 anliegt.

Anstelle der Lagerfedern 211 kann alternativ auch ein elastischer Lagerring 211' oder ein elastischer Hohlzylinder 211' beispielsweise aus weichem Gummi oder Schaumstoff zwischen das Verbindergehäuseteil 312 des ersten Verbinderteils 31 und die Lagergehäuseinnenwand 218 eingefügt werden (in Fig. 9 bruchstückhaft gezeigt).

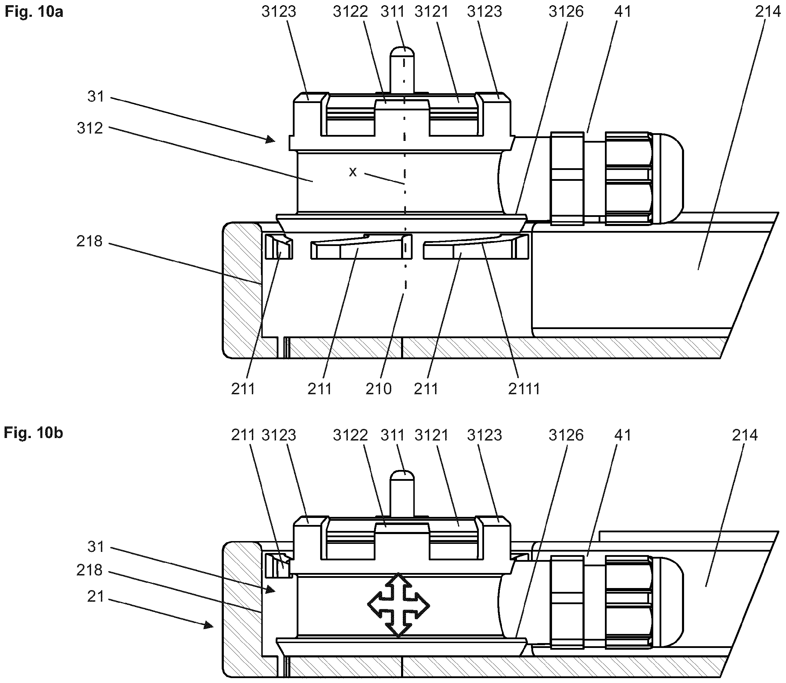

Fig. 10a zeigt das erste Lagergehäuseteil 21 von Fig. 9 geschnitten entlang der Linie A--A von Fig. 9 und das erste Verbinderteil 31, das von oben in das erste Lagergehäuseteil 21 eingesetzt wird. Der konisch ausgebildete Kopplungskragen 3126, wird auf die Lagerfedern 211 aufgesetzt, deren Oberseiten radial von aussen nach zur Vorrichtungssachse x nach unten geneigte Oberseiten 2111 aufweisen. Beim Aufsetzen des ersten Verbinderteils 31 werden die Lagerfedern 211 daher nach aussen verdrängt, bis der Kopplungskragen 3126 durch den Bereich der Lagerfedern 211 hindurch geführt wurde.

Fig. 10b zeigt das erste Lagergehäuseteil 21 von Fig. 10a und das darin eingesetzte erste Verbinderteil 31. Das eingesetzte erste Verbinderteil 31 kann radial in jede Richtung verschoben werden, bis die Lagerfedern 211 vollständig gedehnt sind und der Wand des ersten Lagergehäuseteils 21 anliegen. Weiterhin ist das erste Verbinderteil 31 axial verschiebbar, bis der Kopplungskragen 3126 von unten an die Lagefedern 211 anstösst. Durch entsprechende Dimensionierung der Lagerfedern 211 und des Kopplungskragens 3126 kann das Mass der maximalen radialen Verschiebung und der maximalen axialen Verschiebung wahlweise festgelegt werden.

Sofern die Lagerfedern 211 am Verbindergehäuseteil 312 des ersten Verbinderteils 31 befestigt oder angeformt sind oder falls ein Lagerteil 211'beispielsweise in der Ausgestaltung eines elastischen Rings oder eines elastischen Hohlzylinders verwendet wird, so ist der Kopplungskragen 3126 vorzugsweise am Eingang der ersten Lageröffnung 210 derart vorgesehen, dass sich der Kopplungskragen gegen die Lageröffnung 210 erweitert. Die Oberseite des Kopplungskragens entspricht etwa dem Verlauf der Oberseite der Lagerfedern 211 von Fig. 10a. Hingegen kann der Kopplungskragen vergleichsweise dünn ausgebildet sein und nur eine Dicke von einigen Millimetern aufweisen.

Um in die Lageröffnung 210 eintreten zu können, müssen die Lagerfedern 211 oder das Lagerteil 211' muss zuerst den Kopplungskragen überwinden. Anschliessend werden die und werden die Lagerfedern 211 oder das Lagerteil 211' durch den Kopplungskragen innerhalb der Lageröffnung 210 gehalten.

### Bezugszeichenliste

- 100: Photovoltaiksystem
- 10, 10A, 10B: Photovoltaikmodule
- 1: Verbindungsvorrichtung
- 11: erstes Verbindungsvorrichtungsteil
- 12: zweites Verbindungsvorrichtungsteil
- 2: Lagergehäuse
- 21: erstes Lagergehäuseteil
- 210: erste Lageröffnung
- 211: Lagerfedern
- 2111: geneigte Oberseiten
- 214: erster Anschlusskanal
- 215: erstes Führungselement, Führungskanal
- 218: erste Lagergehäuseinnenwand
- 219: erstes Montageteil
- 22: zweites Lagergehäuseteil
- 220: zweite Lageröffnung
- 2200: Montageöffnung
- 224: zweiter Anschlusskanal
- 225: zweites vorzugsweise elastisches Führungselement, Führungszapfen
- 2251: Zentrierkonus
- 2252: elastische Führungsstäbe des mehrteiligen Führungszapfens 225
- 228: zweite Lagergehäuseinnenwand
- 229: zweites Montageteil
- 3: elektrische Verbinder
- 30: Ringkammer
- 31: erstes Verbinderteil
- 311: erster Verbindungskontakt
- 312: erstes Verbindergehäuseteil
- 3120: erste Kontaktkammer
- 3121: erstes Verbindungselement
- 3122: erstes zylindrisches Wandelement
- 31220: Wandöffnung, Durchgangsöffnung
- 3123: erstes Zentrierelement, Zentrierzungen
- 31241, 31242: erste Fixierelemente
- 3125: erstes Bodenelement
- 3126: Kopplungskragen
- 32: zweites Verbinderteil
- 3200: Montageöffnung
- 321: zweiter Verbindungskontakt
- 322: zweites Verbindergehäuseteil
- 3220: zweite Kontaktkammer
- 3221: zweites Verbindungselement
- 3222: zweites zylindrisches Wandelement
- 32220: Wandöffnung, Durchgangsöffnung
- 3223: zweites Zentrierelement, Zentrierkragen
- 32241, 32242: zweite Fixierelemente
- 3225: zweites Bodenelement
- 41: erste Kabeldurchführung
- 411: erste Anschlussleitung, Anschlusskabel
- 42: zweite Kabeldurchführung
- 421: zweite Anschlussleitung, Anschlusskabel
- 8: Dichtungsring
- 9: Modulkörper
- 91: erste Aufnahmeform
- 92: zweite Aufnahmeform
- 95: photovoltaische Elemente
- 99: Dachlattung
- x: Vorrichtungssachse

## Patentansprüche

1. Verbindungsvorrichtung (1) zur Verbindung eines ersten und eines zweiten Photovoltaikmoduls (10A, 10B) eines Photovoltaiksystems (100) umfassend ein erstes Verbindungsvorrichtungsteil (11) und ein zweites Verbindungsvorrichtungsteil (12), mit einem elektrischen Verbinder (3), der ein für das erste Photovoltaikmodul (10A) vorgesehenes erstes Verbinderteil (31) mit einem ersten Verbindungskontakt (311) und ein für das zweite Photovoltaikmodul (10) vorgesehenes zweites Verbinderteil (32) mit einem zweiten Verbindungskontakt (321) aufweist, welche erste und zweite Verbindungskontakte (311, 322) vorzugsweise zueinander korrespondierende Steckkontakte sind, **dadurch gekennzeichnet,**
**dass** ein zur Aufnahme des elektrischen Verbinders (3) dienendes Lagergehäuse (2) vorgesehen ist, mit einem ersten Lagergehäuseteil (21), das eine zur Aufnahme des ersten Verbinderteils (31) vorgesehene erste Lageröffnung (210) aufweist, und mit einem zweiten Lagergehäuseteil (22), das eine zur Aufnahme des zweiten Verbinderteils (32) vorgesehene zweite Lageröffnung (220) aufweist;
**dass** wenigstens das erste oder das zweite Verbinderteil (31; 32) im zugehörigen ersten oder zweiten Lagergehäuseteil (21; 22) verschiebbar gehalten ist;
**dass** das erste Verbinderteil (31) ein erstes Verbindergehäuseteil (312) umfasst, in dem der erste Verbindungskontakt (311) gehalten ist und das wenigstens ein erstes Verbindungselement (3121) aufweist;
**dass** das zweite Verbinderteil (32) ein zweites Verbindergehäuseteil (322) umfasst, in dem der zweite Verbindungskontakt (321) gehalten ist und das wenigstens ein zweites Verbindungselement (3221) aufweist; und
**dass** das erste Verbindungsvorrichtungsteil (11), welches das erste Lagergehäuseteil (21) und das erste Verbinderteil (31) umfasst, und das zweite Verbindungsvorrichtungsteil (12), welches das zweite Lagergehäuseteil (22) und das zweite Verbinderteil (32) umfasst, entlang einer Vorrichtungssachse (x) miteinander verbindbar sind, wobei anhand der ersten und zweiten Verbindungselemente (3121, 3221) wenigstens eine formschlüssige Verbindung zwischen dem ersten Verbinderteil (31) und dem zweiten Verbinderteil (32) resultiert.

2. Verbindungsvorrichtung (1) nach Anspruch 1, **dadurch gekennzeichnet, dass** die ersten und zweiten Verbindergehäuseteile (312, 322) mittels der ersten Verbindungselemente (3121) und der zweiten Verbindungselemente (3221), die vorzugsweise wenigstens eine Rastzunge (3121) und einen dazu korrespondierenden Rastkragen (3221) umfassen, formschlüssig miteinander verbindbar sind.

3. Verbindungsvorrichtung (1) nach Anspruch 1 oder 2, **dadurch gekennzeichnet, dass** die ersten und zweiten Verbindergehäuseteile (312, 322) dicht abschliessend miteinander verbindbar sind, und/oder dass die ersten und zweiten Verbindergehäuseteile (312, 322) zueinander korrespondierende erste und zweite Wandelemente (3122, 3222) aufweisen, die vorzugsweise gegeneinander abgestuft sind, und die dicht abschliessend aneinander anliegen oder die dicht abschliessend einen Dichtungsring (8) einschliessen.

4. Verbindungsvorrichtung (1) nach einem der Ansprüche 1 - 3, **dadurch gekennzeichnet, dass** die ersten und zweiten Verbindergehäuseteile (312, 322) zueinander korrespondierende erste und zweite Zentrierelemente (3123, 3223) aufweisen, die vorzugsweise wenigstens eine Zentrierzunge (3123) und einen dazu korrespondierenden Zentrierkragen (3223) umfassen und/oder die vorzugsweise konisch gegeneinander geneigte Zentrierflächen oder Zentriersegmente aufweisen, wobei die Verbindungselemente (3121, 3221) und die Zentrierelemente (3123, 3223) derart dimensioniert sind, dass die Zentrierelemente (3123, 3223) vor den Verbindungselementen (3121, 3221) in gegenseitigen Kontakt gelangen.

5. Verbindungsvorrichtung (1) nach einem der Ansprüche 1 - 4, **dadurch gekennzeichnet,**
**dass** das erste Verbindergehäuseteil (312) topfförmig ausgestaltet ist und eine erste Durchführungsöffnung (3127) aufweist, in die eine erste Kabeldurchführung (41) eingesetzt ist, durch die hindurch ein erstes Anschlusskabel (411) abgedichtet in das erste Verbindergehäuseteil (312) hinein zum ersten Verbindungskontakt (311) geführt ist; und/oder
**dass** das zweite Verbindergehäuseteil (322) topfförmig ausgestaltet ist und eine zweite Durchführungsöffnung (3227) aufweist, in die eine zweite Kabeldurchführung (42) eingesetzt ist, durch die hindurch ein zweites Anschlusskabel (421) abgedichtet in das zweite Verbindergehäuseteil (322) hinein zum zweiten Verbindungskontakt (321) geführt ist.

6. Verbindungsvorrichtung (1) nach einem der Ansprüche 1 - 5, **dadurch gekennzeichnet,**
**dass** das erste Verbindergehäuseteil (312) wenigstens ein erstes Fixierelement (31241, 31242) aufweist, mittels dessen der erste Verbindungskontakt (311) koaxial zur Vorrichtungssachse (x) ausgerichtet gehalten ist; und/oder
**dass** das zweite Verbindergehäuseteil (322) wenigstens ein zweites Fixierelement(32241, 32242) aufweist, mittels dessen der zweite Verbindungskontakt (321) koaxial zur Vorrichtungssachse (x) ausgerichtet gehalten ist.

7. Verbindungsvorrichtung (1) nach Anspruch 6, **dadurch gekennzeichnet,**
**dass** der erste Verbindungskontakt (311) winkelförmig ausgebildet und mittels des wenigstens einen ersten Fixierelements (31241, 31242) mit einem Winkelteil formschlüssig und koaxial zur Vorrichtungssachse (x) ausgerichtet gehalten ist; und/oder
**dass** der zweite Verbindungskontakt (321) plattenförmig und vorzugsweise elastisch ausgebildet und mittels mehreren zweiten Fixierelementen (32241), die als Haltezungen (32241) ausgebildet sind, koaxial zur Vorrichtungssachse (x) ausgerichtet gehalten ist; oder
**dass** der zweite Verbindungskontakt (321) plattenförmig und elastisch ausgebildet und mittels mehreren zweiten Fixierelementen (32241), die als Haltezungen (32241) ausgebildet sind, koaxial zur Vorrichtungssachse (x) ausgerichtet gehalten und zentral von einer Haltefeder (32242) gestützt ist.

8. Verbindungsvorrichtung (1) nach einem der Ansprüche 1 - 7, **dadurch gekennzeichnet, dass** wenigstens das erste oder das zweite Verbinderteil (31; 32) im zugehörigen ersten oder zweiten Lagergehäuseteil (21; 22) mittels eines wenigstens eines elastischen Lagerelements (211, 211') verschiebbar und elastisch gehalten ist, wobei das wenigstens eine Lagerelement (211, 211') zwischen einerseits einer ersten oder zweiten Lagergehäuseinnenwand (218; 228), welche die erste oder zweite Aufnahmeöffnung (210; 220) des zugehörigen ersten oder zweiten Lagergehäuseteil (21; 22) umschliesst, und andererseits dem ersten oder zweiten Verbinderteil (31; 32) angeordnet und mit der ersten oder zweiten Lagergehäuseinnenwand (218; 228) oder mit dem ersten oder zweiten Verbinderteil (31; 32) verbunden oder davon getrennt ist.

9. Verbindungsvorrichtung (1) nach Anspruch 8, **dadurch gekennzeichnet,**
**dass** das erste oder das zweite Lagergehäuseteil (21; 22) mehrere vorzugsweise zungenförmige Lagerfedern (211) aufweist, die innerhalb der ersten oder zweiten Lageröffnung (210, 220) gegen das verschiebbar gehaltene erste oder zweite Verbinderteil (31; 32) geneigt sind, oder
**dass** das verschiebbar gehaltene erste oder zweite Verbinderteil (31; 32) mehrere vorzugsweise zungenförmige Lagerfedern (211) aufweist, die gegen eine erste oder zweite Lagergehäuseinnenwand (218, 228), welche die zugehörige erste oder zweite Lageröffnung (210, 220) umschliesst, geneigt sind, oder
**dass** zwischen einer ersten oder zweiten Lagergehäuseinnenwand (218, 228), welche die erste oder die zweite Lageröffnung (210, 220) umschliesst, und dem verschiebbar gehaltenen ersten oder zweiten Verbinderteil (31; 32) wenigstens ein hohlzylinderförmiges oder ringförmiges elastisches Lagerelement (211') angeordnet ist.

10. Verbindungsvorrichtung (1) nach Anspruch 9, **dadurch gekennzeichnet, dass** die Lagerfedern (211) geneigt sind oder entsprechend geneigte Flächen aufweisen, wodurch die Lagerfedern (211) komprimierbar oder biegbar sind, wenn das verschiebbar gehaltene erste oder zweite Verbinderteil (31; 32) eingesetzt wird.

11. Verbindungsvorrichtung (1) nach Anspruch 9 oder 10, **dadurch gekennzeichnet,**
**dass** das verschiebbar gelagerte erste oder zweite Verbindergehäuseteil (312, 322) an der Unterseite einen vorzugsweise konisch geformten Kopplungskragen (3126) aufweist, der zur Verdrängung der mit dem ersten oder zweiten Lagergehäuseteil (21; 22) verbundenen Lagerfedern (211) vorgesehen ist und der nach Passieren der Lagerfedern (211) als Anschlag dient, an dem die Lagerfedern (211) anschlagen, wenn das verschiebbar gehaltene erste oder zweite Verbindergehäuseteil (312, 322) nach aussen gezogen wird, oder
**dass** innerhalb der ersten oder zweiten Lageröffnung (210, 220) ein vorzugsweise konisch geformter Kopplungskragen vorgesehen ist, der zur Verdrängung der mit dem verschiebbar gelagerten ersten oder zweiten Verbindergehäuseteil (312, 322) verbundenen Lagerfedern (211) vorgesehen ist und der nach Passieren der Lagerfedern (211) als Anschlag dient, an den die Lagerfedern (211) anschlagen, wenn das verschiebbar gelagerte erste oder zweite Verbindergehäuseteil (312, 322) nach aussen gezogen wird.

12. Verbindungsvorrichtung (1) nach einem der Ansprüche 5 - 11, **dadurch gekennzeichnet, dass** das erste und das zweite Lagergehäuseteil (21; 22) je einen Anschlusskanal (214; 224) aufweisen, der zur Aufnahme der zugehörigen Kabeldurchführung (41; 42) dient und/oder dass das erste und/oder das zweite Lagergehäuseteil (21; 22) je ein erstes Montageteil (219) oder zweites Montageteil (229) aufweisen, das formschlüssig und/oder durch eine Rastverbindung mit dem Modulkörper (9) des zugehörigen Photovoltaikmoduls (1) verbindbar ist.

13. Verbindungsvorrichtung (1) nach einem der Ansprüche 1 - 12, **dadurch gekennzeichnet,**
**dass** das erste und das zweite Lagergehäuseteil (21; 22) mit zueinander korrespondierenden Führungselementen (215; 225), vorzugsweise wenigstens einem Führungskanal (215) und wenigstens einem Führungszapfen (225), versehen sind, mittels denen das erste und das zweite Lagergehäuseteil (21; 22) in eine gegenseitige koaxiale Ausrichtung führbar und in koaxialer Ausrichtung fest oder elastisch haltbar sind, oder
**dass** das erste und das zweite Lagergehäuseteil (21; 22) mit zueinander korrespondierenden Führungselementen (215; 225), vorzugsweise wenigstens einem Führungskanal (215) und wenigstens einem mehrteiligen Führungszapfen (225), versehen sind, mittels denen das erste und das zweite Lagergehäuseteil (21; 22) in eine gegenseitige koaxiale Ausrichtung führbar und elastisch haltbar sind, wobei der Führungszapfen (225) wenigstens ein elastisches Element umfasst oder mehrere vorzugsweise parallel zueinander ausgerichtete elastische Führungsstäbe (2252) umfasst, die vorzugsweise in einer Einsenkung gehalten sind.

14. Photovoltaiksystem (100) mit wenigstens zwei einander überlappenden Photovoltaikmodulen (10), die im Bereich der Überlappung mittels einer Verbindungsvorrichtung (1) nach einem der Ansprüche 1 - 13 elektrisch oder elektrisch und mechanisch miteinander verbunden sind.

15. Photovoltaikmodul (10) mit einem Modulkörper (9), der wenigstens ein photovoltaisches Element umfasst oder hält, für ein Photovoltaiksystem (100) nach Anspruch 14, **dadurch gekennzeichnet,**
**dass** ein erstes Verbindungsvorrichtungsteil (11) der Verbindungsvorrichtung (1) auf einer ersten Seite des Modulkörpers (9) angeordnet und vorzugsweise formschlüssig mit dem Modulkörper (9) verbunden ist,
**dass** ein zweites Verbindungsvorrichtungsteil (12) der Verbindungsvorrichtung (1) auf einer vorzugsweise der ersten Seite gegenüber liegenden zweiten Seite des Modulkörpers (9) angeordnet und vorzugsweise formschlüssig mit dem Modulkörper (9) verbunden ist,
**dass** das erste und das zweite Verbindungsvorrichtungsteil (11) in entgegengesetzte Richtungen ausgerichtet und je mit einem zweiten oder ersten Verbindungsvorrichtungsteil (12, 11) eines benachbarten Photovoltaikmoduls (10) verbindbar sind, um je eine zusammengesetzte Verbindungsvorrichtung (1) zu realisieren.

16. Photovoltaikmodul (10) nach Anspruch 13, **dadurch gekennzeichnet, dass** die Verbindungsvorrichtungsteile (11, 12) den Modulkörper (9) auf einer Seite, vorzugsweise auf einer Längsseite, überragen, und/oder dass der Modulkörper (9) die Form einer Platte, einer Dachpfanne, eines Dachziegels oder eines Dachsteins aufweist.
